# EUROPEAN PATENT SPECIFICATION

(11) **EP 3 081 828 B1**
(45) Date of publication and mention of the grant of the patent: **17.08.2022**
(21) Application number: 16163672.5
(22) Date of filing: 04.04.2016
(51) Int. Cl.: F16H 1/32

(54) **REDUCTION GEAR DEVICE**
REDUKTIONSGETRIEBE
TRANSMISSION À REDUCTION

(30) Priority: 15.04.2015 JP 2015083522
(43) Date of publication of application: 19.10.2016
(73) Proprietor: Nabtesco Corporation, Tokyo (JP)
(72) Inventor: FUJIKAWA, Tomohiro, Fuwa-gun, Gifu (JP); ASAKAWA, Yuichi, Fuwa-gun, Gifu (JP)
(74) Representative: Grünecker Patent- und Rechtsanwälte PartG mbB

(56) References cited:
- EP-A2- 1 296 084
- EP-A2- 1 767 815
- WO-A1-2009/081451
- DE-A1-102012 009 837

## Description

### Technical Field

The present invention relates to a reduction gear device wherein a gear having external teeth is located in a case having internal teeth on the inner circumference side and the gear rotates with the external teeth thereof engaging with the internal teeth of the case.

### Background Art

A reduction gear device as described in the preamble of claim 1 is already known from EP 1 767 815 A2. An eccentric oscillation-type reduction gear device is known as a reduction gear device of this sort. Such a reduction gear device is generally provided with: a case having internal teeth on the inner circumference side; a gear (which will be hereinafter referred to as an external gear) having external teeth to engage with the internal teeth; a crankshaft which is inserted into a through hole formed at the external gear and rotates to oscillate the external gear; and a carrier configured to hold the external gear via the crankshaft. The crankshaft is rotatably held by the carrier, and is provided with an eccentric body. The eccentric body is inserted into the through hole of the external gear. This allows the carrier to hold the external gear via the crankshaft.

Moreover, the carrier has: a first holding part configured to rotatably hold one end part of the crankshaft; a second holding part configured to rotatably hold the other end part of the crankshaft; and a pillar configured to couple the first holding part and the second holding part with each other in the axial direction, and the aforementioned external gear is located between the first holding part and the second holding part. At the external gear, a through hole through which the pillar is extended is formed in addition to the through hole into which the eccentric body of the crankshaft is inserted.

When input from outside causes the crankshaft in such a reduction gear device to rotate on the central axis thereof, the eccentric body oscillates the external gear, and the external gear rotates with the external teeth thereof engaging with the internal teeth of the case. This allows the crankshaft to revolve while rotating on the own axis, and the revolving motion causes the carrier to rotate (see Patent Document 1, for example).

### Citation List

### Patent Document

Patent Document 1: JP 2013-007459 A

### Summary of Invention

### Technical Problem

In the aforementioned reduction gear device, crankshafts and pillars of the carrier are generally arranged alternately in the circumferential direction, and the number of the crankshafts and the number of the pillars are equal to each other as illustrated in Patent Document 1. Such a structure however may possibly complicate the entire structure of the carrier, since the number of the pillars which are formed at the carrier and respectively have a relatively complex structure is equal to the number of the crankshafts. Accordingly, there is room for improvement in simplification of the carrier.

The present invention has been made in view of such circumstances, and the object thereof is to provide a reduction gear device with which the structure of a carrier can be simplified and which can be manufactured advantageously.

### Solution to Problem

The above and other objects of the invention are achieved by the reduction gear device according to claim 1. Preferred embodiments are claimed in the dependent claims. The present invention is a reduction gear device including: a case having internal teeth on an inner circumference side; a gear having external teeth engaging with the internal teeth; crankshafts oscillating the gear; and a carrier having a first holding part rotatably holding one end parts of the crankshafts, a second holding part rotatably holding the other end parts of the crankshafts, and at least two pillars coupling the first holding part and the second holding part with each other, wherein the crankshafts are arranged between the at least two pillars in a circumferential direction around a central axis of the internal teeth of the case, and the number of the crankshafts is larger than the number of the at least two pillars.

With a reduction gear device according to the present invention wherein a plurality of crankshafts are arranged between pillars, the number of the pillars is decreased with respect to the number of the crankshafts in comparison with a case where the number of crankshafts and the number of pillars are equal to each other. This can simplify the structure of the carrier. Moreover, increase in the number of the crankshafts with respect to the number of the pillars causes increase in the contact area between the crankshafts and the gear and, furthermore, increase in power to be transmitted from the crankshafts to the gear.

In the reduction gear device, needle roller bearings may be respectively arranged between the first holding part and the one end parts of the crankshafts, and between the second holding part and the other end parts of the crankshaft.

It is possible with such a structure to reduce power in the thrust direction to be transmitted from the crankshafts to the carrier in comparison with a case where a tapered roller bearing is used for holding a crankshaft.

Moreover, in the reduction gear device the gear may comprise: crankshaft through holes through which the crankshafts are extended; and at least two pillar through holes through which the at least two pillars are extended, wherein the crankshafts through holes are arranged between the at least two pillar through holes in a circumferential direction of the gear, and the number of the crankshaft through holes is larger than the number of the at least two pillar through holes.

It is possible with the present invention to construct a reduction gear device with which the structure of a carrier can be simplified. Moreover, the number of crankshaft through holes is increased with respect to the number of pillar through holes in comparison with a case where the number of crankshaft through holes and the number of pillar through holes are equal to each other. This causes increase in the contact area between the crankshafts and the gear and, furthermore, increase in power to be transmitted from the crankshafts to the gear.

Moreover, in the reduction gear device gear, two pillar through holes may be spaced from each other in the circumferential direction of the gear, and the same plural number of crankshaft through holes may be arranged in each of two areas between the two pillar through holes in the circumferential direction of the gear.

It is possible with such a structure to uniformize power to be applied to the gear on one and the other of areas between two pillar through holes and, therefore, the durability can be improved.

### Advantageous Effects of Invention

It is possible with the present invention to provide a reduction gear device with which the structure of a carrier can be simplified and which can be manufactured advantageously.

### Brief Description of Drawings

Fig. 1 is a sectional view of a reduction gear device according to one embodiment of the present invention.
Fig. 2 is a sectional view cut along the line II-II in Fig. 1.

### Description of Embodiments

The following description will explain one embodiment of the present invention with reference to the drawings.

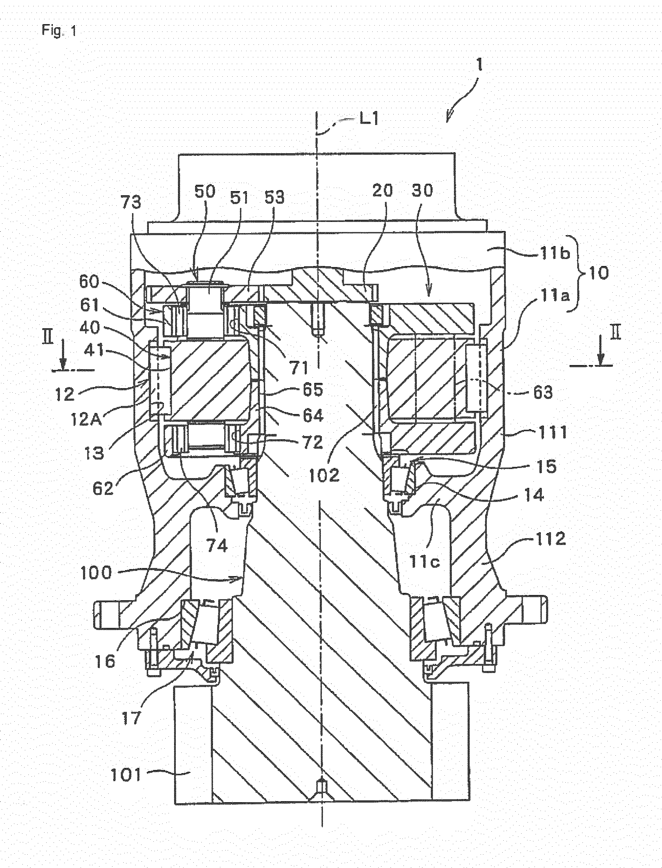

A reduction gear device 1 according to this embodiment illustrated in Fig. 1 is an eccentric oscillation-type reduction gear device (an eccentric rocking-type reduction gear device). The reduction gear device 1 is suitable as a reduction gear device to be used for a yaw drive assembly, which performs yaw drive so as to rotate a nacelle against a tower in a windmill, or a pitch drive assembly, which performs pitch drive so as to rotate the shaft part of a blade against a hub on the nacelle side, for example. It is to be noted that the reduction gear device 1 can be used not only for a windmill but also for various industrial machines, construction machines or the like.

As illustrated in Fig. 1, the reduction gear device 1 according to this embodiment is provided with: a case 10; an input gear 20 and a reduction gear unit 30 housed in the case 10; and an output shaft 100 which has one end part coupled with the reduction gear unit 30 and the other end part projected from the case 10. The case 10 is formed in a cylindrical shape and has internal teeth 12 on the inner circumference side (inner circumferential surface). The reduction gear unit 30 has: an external gear 40 having external teeth 41 to engage with the internal teeth 12 of the case 10; a crankshaft 50 configured to oscillate (rock) the external gear 40; and a carrier 60 configured to rotatably hold the crankshaft 50 and hold the external gear 40 via the crankshaft 50.

In the reduction gear device 1, rotation inputted from a motor (not illustrated) through the input gear 20 is deceased in speed by the reduction gear unit 30 and then outputted from the output shaft 100. The other end part of the output shaft 100 projected from the case 10 is provided with a driving gear 101. Rotation inputted from the input gear 20 is decreased in speed and then transmitted to a driven gear (not illustrated) engaging with the driving gear 101.

Denoted at L1 in the figure is the central axis of the output shaft 100. The central axis of the inner circumferential surface of the case 10 provided with the internal teeth 12 is positioned coaxially with the central axis L1. When a direction is referred to simply as "axial direction" in the following description, this means a direction which extends on the central axis L1, or a direction parallel to the central axis L1. Moreover, a direction orthogonal to the central axis L1 will be referred to as a radial direction, and a direction around the central axis L1 will be referred to as a circumferential direction.

The case 10 has: a main case part 11a which is formed in a cylindrical shape having both end parts that are open; and a sub case part 11b which is mounted on an open portion on one end part of the main case part 11a. The main case part 11a and the sub case part 11b are coupled with each other by fastening edge parts of the respective case parts with each other with bolts (not illustrated). Regarding the main case part 11a, the output shaft 100 is projected from the other end part opposite to the one end part where the sub case part 11b is mounted. An annular wall part 11c protruded to inside in the radial direction is formed on the inner circumferential surface of a middle portion between the one end part and the other end part of the main case part 11a.

The main case part 11a has: an input side portion 111 which is positioned on the one end part side with respect to the annular wall part 11c, i.e., the sub case part 11b side; and an output side portion 112 which is positioned on the other end part side with respect to the annular wall part 11c, i.e., a side where the output shaft 100 is projected. Among these members, the reduction gear unit 30 is housed in the input side portion 111, and the aforementioned internal teeth 12 are provided on the inner circumferential surface of the input side portion 111.

The internal teeth 12 are constituted of a plurality of internal tooth pins 12A which are respectively formed in a pin shape. The internal tooth pins 12A are fitted in and attached to a plurality of pin grooves 13 which are formed in line in the circumferential direction over the entire area of the inner circumferential surface of the input side portion 111 of the main case part 11a. The internal tooth pins 12A are arranged in a manner such that the longitudinal direction thereof is positioned parallel to the central axis L1 direction. The Internal tooth pins 12A are arranged on the inner circumferential surface of the input side portion 111 of the main case part 11a at equal intervals along the circumferential direction, and are configured to engage with the external teeth 41 of the aforementioned external gear 40.

An annular first bearing housing groove 14 recessed from the input side portion 111 side to the output side portion 112 side is formed at the annular wall part 11c of the main case part 11a. A first bearing 15 is inserted into the first bearing housing groove 14. The first bearing 15 illustrated in the figure is a tapered roller bearing. The first bearing 15 has an outer ring which is brought into contact with or close to the bottom face of the first bearing housing groove 14 in the axial direction and brought into contact with or close to a side face of the first bearing housing groove 14 in the radial direction. This allows the first bearing 15 to be attached to the first bearing housing groove 14.

Moreover, an annular second bearing housing groove 16 recessed from the output side portion 112 side to the input side portion 111 side is formed at the other end part (outer end part) of the output side portion 112. A second bearing 17 is inserted into the second bearing housing groove 16. The second bearing 17 illustrated in the figure is a tapered roller bearing. The second bearing 17 has an outer ring which is brought into contact with or close to the bottom face of the second bearing housing groove 16 in the axial direction and brought into contact with or close to a side face of the second bearing housing groove 16 in the radial direction. This allows the second bearing 17 to be attached to the second bearing housing groove 16.

The output shaft 100 is inserted into the inner circumference side of the inner ring of the first bearing 15 and the inner circumference side of the inner ring of the second bearing 17. This allows the output shaft 100 to be rotatably held by the case 10. The output shaft 100 is projected from the first bearing 15 to the input side portion 111 of the main case part 11a. The output shaft 100 is coupled with the reduction gear unit 30 at a portion thereof projected to the input side portion 111. A spline part 102 is formed at the outer circumferential surface of a portion of the output shaft 100 projected to the input side portion 111. The carrier 60 of the reduction gear unit 30 is fitted in the spline part 102. This allows the output shaft 100 to be coupled with the reduction gear unit 30. Details of such a structure will be described later.

The aforementioned input gear 20 is located on the sub case part 11b side of the case 10. A motor (illustration is omitted) is attached to the sub case part 11b, so that rotation of the motor is transmitted to the input gear 20. The input gear 20 is a spur gear, and is located in a manner such that the central axis thereof is positioned on the central axis L1 of the output shaft 100. The input gear 20 engages with a spur gear 53, which is provided at one end part of the crankshaft 50 and will be described later, so that rotation of the input gear 20 is transmitted to the crankshaft 50.

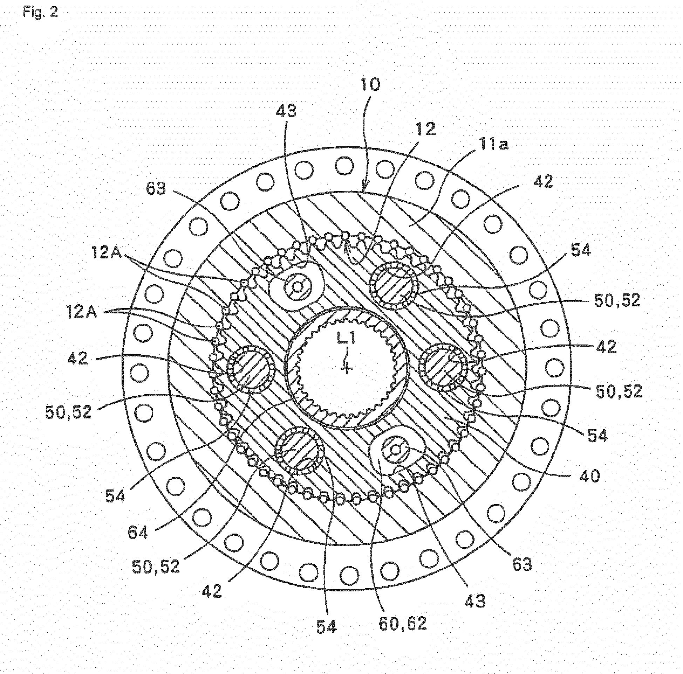

The reduction gear unit 30 has the external gear 40, the crankshaft 50 and the carrier 60 as described above. Among these members, the carrier 60 has: a first holding part 61 configured to rotatably hold one end part of the crankshaft 50 (end part on the input gear 20 side); a second holding part 62 configured to rotatably hold the other end part of the crankshaft 50 (end part on a side where the output shaft 100 is projected); a pillar 63 (see Fig. 2) configured to couple the first holding part 61 and the second holding part 62 with each other; and a cylindrical coupling part 64 to be used for coupling the carrier 60 with the output shaft 100. It is to be noted that the pillar 63 is drawn with long dashed double-short dashed lines in Fig. 1 for convenience of explanation.

The first holding part 61 and the second holding part 62 are respectively formed in an annular shape, and are spaced from and face each other in the axial direction. The pillar 63 is provided to lie between a substantially middle area of the first holding part 61 in the radial direction and a substantially middle area of the second holding part 62 in the radial direction, so as to couple the first holding part 61 and the second holding part 62 with each other. Moreover, the cylindrical coupling part 64 is provided to lie between an inner circumferential edge of the first holding part 61 and an inner circumferential edge of the second holding part 62. The cylindrical coupling part 64 is formed in a cylindrical shape, and has a spline part 65 formed on the inner circumferential surface thereof. The spline part 102 of the output shaft 100 is inserted into and fitted in the spline part 65, so that the output shaft 100 and the reduction gear unit 30 are coupled with each other.

A first end part through hole 71 is formed at the first holding part 61. One end part of the crankshaft 50 is rotatably held by the first end part through hole 71 via a first crankshaft bearing 73. The first crankshaft bearing 73 illustrated in the figure is a needle roller bearing. That is, the needle roller bearing 73 is located between the first end part through hole 71 of the first holding part 61 and one end part of the crankshaft 50 in this embodiment. Moreover, a second end part through hole 72 is formed at the second holding part 62. The other end part of the crankshaft 50 is rotatably held by the second end part through hole 72 via a second crankshaft bearing 74. The second crankshaft bearing 74 illustrated in the figure is a needle roller bearing. That is, the needle roller bearing 74 is located between the second end part through hole 72 of the second holding part 62 and the other end part of the crankshaft 50 in this embodiment. It is to be noted that the first crankshaft bearing 73 and the second crankshaft bearing 74 functioning as needle roller bearings are respectively constructed by holding a cylindrical rolling member between an outer race and an inner race, though the bearings are drawn schematically in the figure.

Next, the crankshaft 50 in this embodiment has a shaft body 51, an eccentric body 52 (see Fig. 2) and the aforementioned spur gear 53. Among these members, one end part of the shaft body 51 is rotatably held by the first end part through hole 71 via the first crankshaft bearing 73, while the other end part of the shaft body 51 is rotatably held by the second end part through hole 72 via the second crankshaft bearing 74. Moreover, the one end part of the shaft body 51 is projected from the first end part through hole 71 to the sub case part 11b side, and the spur gear 53 is fixed to a portion of the one end part of the shaft body 51 projected from the first end part through hole 71.

The eccentric body 52 is located between the first holding part 61 and the second holding part 62 of the carrier 60 with the crankshaft 50 being held by the carrier 60. Moreover, the external gear 40 is located between the first holding part 61 and the second holding part 62. Here, the eccentric body 52 is inserted into the external gear 40.

Fig. 2 is a vertical view cut along the line II-II in Fig. 1. A crankshaft through hole 42 into which the eccentric body 52 is to be inserted is formed at the external gear 40. The crankshaft through hole 42 is extended parallel to the axial direction. As illustrated in Fig. 2, a crankshaft bearing 54 is located between the eccentric body 52 and the crankshaft through hole 42. The crankshaft bearing 54 is a needle roller bearing. Moreover, a pillar through hole 43 through which the pillar 63 of the aforementioned carrier 60 is to be extended is also formed at the external gear 40.

The number of the external teeth 41 provided at the external gear 40 is smaller than the number of the internal teeth 12 on the inner circumference of the case 10 by one or more. Therefore, engagement of the external teeth 41 and the internal teeth 12 deviates with rotation of the crankshaft 50, and the external gear 40 oscillates (rocks) and rotates eccentrically.

Regarding the external gear 40, it is to be noted that the crankshaft through hole 42 is formed in a circular shape, while the pillar through hole 43 is formed in a trapezoidal shape having round corners. That is, the crankshaft through hole 42 and the pillar through hole 43 have different shapes. The pillar through hole 43 is not limited to the aforementioned trapezoidal shape, but is formed in a shape which does not interfere with the pillar 63 when the external gear 40 oscillates and rotates eccentrically.

As illustrated in Fig. 2, four crankshafts 50 are provided around the central axis L1 in this embodiment. Accordingly, four first end part through holes 71 are formed at the first holding part 61 of the carrier 60, and four second end part through holes 72 are formed at the second holding part 62. Moreover, the spur gear 53 is fixed by each crankshaft 50, so that four spur gears 53 are respectively arranged around the input gear 20 so as to engage with the input gear 20. Moreover, four crankshaft through holes 42 are formed at the external gear 40.

Now, the arrangement configuration of the crankshafts 50 and the pillars 63 of the carrier 60 according to this embodiment will be described in detail with reference to Fig. 2. In this embodiment, the carrier 60 has two pillars 63, and a plurality of crankshafts 50 are arranged between the pillars 63 in a radial direction around the central axis L1 of the output shaft 100, i.e., the central axis of the internal teeth 12 of the case 10. More specifically, the two pillars 63 are formed to be separated from each other by 180° in the circumferential direction around the central axis L1 and face each other across the central axis L1. In addition, two (the same plural number of) crankshafts 50 are arranged in each of two areas between the two pillars 63 in the circumferential direction.

In the illustrated example, adjacent pillar 63 and crankshaft 50 are spaced from each other by 60° in the circumferential direction around the central axis L1, and two adjacent crankshafts 50 are spaced from each other by 60° in the circumferential direction around the central axis L1. That is, six members composed of two pillars 63 and four crankshafts 50 are arranged at equal intervals in the circumferential direction in this embodiment.

Similarly, two pillar through holes 43 in the external gear 40 are formed to be spaced from each other by 180° in the circumferential direction around the central axis L1 and face each other across the central axis L1. In addition, two (the same plural number of) crankshaft through holes 42 are formed in each of two areas between the two pillar through holes 43 in the circumferential direction of the external gear 40.

Next, the function of this embodiment will be described.

When a motor which is not illustrated in the figure causes the input gear 20 in the aforementioned reduction gear device 1 to rotate, the respective spur gears 53 engaging with the input gear 20 are rotated, and the respective crankshafts 50 are rotated. With such rotation, the external gear 40 rotates eccentrically to oscillate while causing deviation of engagement with the internal teeth 12. With such eccentric rotation of the external gear 40, the respective crankshafts 50 move in revolving motion centering on the central axis L1 while rotating on the own axis. Such revolving motion of the crankshaft 50 causes the carrier 60 configured to hold the crankshafts 50 to rotate. This allows the output shaft 100 coupled with the carrier 60 in spline coupling to rotate, and then torque can be transmitted from the driving gear 101.

With the reduction gear device 1 according to this embodiment wherein a plurality of crankshafts 50 are arranged between pillars 63 of the carrier 60, the number of the pillars 63 is decreased with respect to the number of the crankshafts 50 in comparison with a case where the number of crankshafts and the number of pillars are equal to each other. This simplifies the structure of the carrier 60 and, therefore, manufacturing of the reduction gear device 1 can be proceeded advantageously.

That is, the probability of generation of a so-called mold cavity in the carrier 60 during formation by molding becomes high in a case where the structure of the carrier 60 is complex. That is, the probability of occurrence of variation in the density of the carrier 60 becomes high. On the contrary, it is possible with the reduction gear device 1 according to this embodiment to simplify the structure of the carrier 60 and, therefore, generation of a mold cavity can be suppressed even when the carrier 60 is formed by molding. Accordingly, there is an advantage that the product quality can be increased. Moreover, there is another advantage that the mold can be simplified and, therefore, the manufacturing cost can be lowered.

On the other hand, in a case where carrier 60 is formed by forging and the structure of the carrier 60 is complex, a complex special tool is required for formation by forging and, therefore, the manufacturing cost is increased. On the contrary, it is possible with the reduction gear device 1 according to this embodiment to simplify the structure of the carrier 60 and, therefore, complication of a special tool can be suppressed even when the carrier 60 is formed by forging. Accordingly, there is an advantage that the manufacturing cost can be lowered.

Moreover, it is possible with the reduction gear device 1 according to this embodiment to cause increase in the contact area between the crankshafts 50 and the external gear 40 by increasing the number of the crankshafts 50 with respect to the number of the pillars 63 and, therefore, power to be transmitted from the crankshafts 50 to the external gear 40 can be increased. In other words, the number of the crankshaft through holes 42 in the external gear 40 is increased with respect to the number of the pillar through holes 43 in comparison with a case where the number of crankshaft through holes and the number of pillar through holes are equal to each other. This can cause increase in the contact area between the crankshafts 50 and the external gear 40 and, therefore, power to be transmitted from the crankshafts 50 to the external gear 40 is increased.

Moreover, needle roller bearings (73, 74) are respectively arranged between the first holding part 61 of the carrier 60 and the one end part of the crankshaft 50, and between the second holding part 62 and the other end part of the crankshaft 50 in the reduction gear device 1 according to this embodiment. It is possible with such a structure to reduce power in the thrust direction to be transmitted from a crankshaft 50 to the carrier 60 in comparison with a case where a tapered roller bearing is used for holding the crankshaft 50. As a result, the stiffness of the carrier 60 at a level which does not cause a problem in actual use is ensured even when the number of pillars 63 is decreased. This makes it possible to prevent a functional problem from being caused by simplification of the carrier 60.

Furthermore, two pillar through holes 43 are arranged in the external gear 40 so as to be spaced from each other in the circumferential direction of the gear, and the same plural number of, or more specifically two, crankshaft through holes 42 are arranged in each of two areas between the two pillar through holes 43 in the circumferential direction in this embodiment. That is, the same plural number of, or more specifically two, crankshafts 50 are arranged in each of two areas between the two pillars 63 in the circumferential direction in the reduction gear device 1. It is possible with such a structure to uniformize power to be applied to the external gear 40 in one and the other of areas between the two pillar through holes 43. This makes it possible to improve the durability of the external gear 40.

Although one embodiment of the present invention has been described above, the present invention is not limited to the above embodiment. Although two pillars 63 are arranged and four crankshafts 50 are arranged in the reduction gear device 1 in the above embodiment, the number of the pillars 63 and the number of the crankshafts 50 may be other aspects, for example. Three crankshafts 50 may be arranged, for example, in each of two areas between two pillars 63 in the circumferential direction. Moreover, three pillars 63 may be arranged in the reduction gear device 1, and a plurality of crankshafts 50 may be arranged between adjacent pillars 63. The scope of the invention is only defined by the appended claims.

### Reference Signs List

- 1: Reduction Gear Device
- 10: Case
- 12: Internal Tooth
- 20: Input Gear
- 30: Reduction Gear Unit
- 40: External Gear
- 41: External Tooth
- 42: Crankshaft Through Hole
- 43: Pillar Through Hole
- 50: Crankshaft
- 53: Spur Gear
- 60: Carrier
- 61: First Holding Part
- 62: Second Holding Part
- 63: Pillar
- 71: First End Part Through Hole
- 72: Second End Part Through Hole
- 73: First Crank Bearing
- 74: Second Crank Bearing
- L1: Central Axis

## Claims

1. A reduction gear device (1) comprising:
a case (10) having internal teeth (12) on an inner circumference side;
a gear (40) having external teeth (41) engaging with the internal teeth (12);
crankshafts (50) oscillating the gear (40); and
a carrier (60) having a first holding part (61) rotatably holding one end parts of the crankshafts (50),
a second holding part (62) rotatably holding the other end parts of the crankshafts (50), and at least two pillars (63) coupling the first holding part (61) and the second holding part (62) with each other,
**characterized in that**
the crankshafts (50) are arranged between the at least two pillars (63) in a circumferential direction around a central axis (L1) of the internal teeth (12) of the case (10), and the number of the crankshafts (50) is larger than the number of the at least two pillars (63).

2. The reduction gear device (1) according to claim 1, wherein needle roller bearings (73, 74) are respectively arranged between the first holding part (61) and the one end parts of the crankshafts (50), and between the second holding part (62) and the other end parts of the crankshafts (50).

3. The reduction gear device (1) according to claim 1 or 2, wherein the gear (40) comprises:
crankshaft through holes (42) through which the crankshafts (50) are extended; and
at least two pillar through holes (43) through which the at least two pillars (63) are extended,
wherein the crankshaft through holes (42) are arranged between the at least two pillar through holes (43) in a circumferential direction of the gear (40), and the number of the crankshaft through holes (42) is larger than the number of the at least two pillar through holes (43).

4. The reduction gear device (1) according to claim 3, wherein
two pillar through holes (43) are spaced from each other in the circumferential direction of the gear (40), and
the same plural number of crankshaft through holes (42) is arranged in each of two areas between the two pillar through holes (43) in the circumferential direction of the gear (40).

## Patentansprüche

1. Untersetzungsgetriebe-Vorrichtung (1), die umfasst:
ein Gehäuse (10) mit Innenverzahnung (12) an einer Innenumfangsseite;
ein Zahnrad (40) mit Außenverzahnung (41), die mit der Innenverzahnung (12) in Eingriff ist; Kurbelwellen (50), die das Zahnrad (40) in Schwingung versetzen; sowie einen Träger (60) mit einem ersten Halteteil (61), der die einen Endteile der Kurbelwellen (50) drehbar hält, einem zweiten Halteteil (62), der die anderen Endteile der Kurbelwellen (50) drehbar hält, sowie wenigstens zwei Säulen (63), die den ersten Halteteil (61) und den zweiten Halteteil (62) miteinander koppeln,
**dadurch gekennzeichnet, dass**
die Kurbelwellen (50) zwischen den wenigstens zwei Säulen (63) in einer Umfangsrichtung um eine Mittelachse (L1) der Innenverzahnung (12) des Gehäuses (10) herum angeordnet sind, und
die Anzahl der Kurbelwellen (50) größer ist als die Anzahl der wenigstens zwei Säulen (63).

2. Untersetzungsgetriebe-Vorrichtung (1) nach Anspruch 1,
wobei Nadellager (73, 74) jeweils zwischen dem ersten Halteteil (61) und den einen Endteilen der Kurbelwellen (50) sowie zwischen dem zweiten Halteteil (62) und den anderen Endteilen der Kurbelwellen (50) angeordnet sind.

3. Untersetzungsgetriebe-Vorrichtung (1) nach Anspruch 1 oder 2, wobei das Zahnrad (40) umfasst:
Kurbelwellen-Durchgangslöcher (42), durch die sich die Kurbelwellen (50) hindurch erstrecken, sowie
wenigstens zwei Säulen-Durchgangslöcher (43), durch die sich die wenigstens zwei Säulen (63) hindurch erstrecken, wobei die Kurbelwellen-Durchgangslöcher (42) zwischen den wenigstens zwei Säulen-Durchgangslöchern (43) in einer Umfangsrichtung des Zahnrades (40) angeordnet sind, und die Anzahl der Kurbelwellen-Durchgangslöcher (42) größer ist als die Anzahl der wenigstens zwei Säulen-Durchgangslöcher (43).

4. Untersetzungsgetriebe-Vorrichtung (1) nach Anspruch 3, wobei
zwei Säulen-Durchgangslöcher (43) in der Umfangsrichtung des Zahnrades (40) voneinander beabstandet sind, und
in jedem von zwei Bereichen zwischen den zwei Säulen-Durchgangslöchern (43) in der Umfangsrichtung des Zahnrades (40) die gleiche Vielzahl von Kurbelwellen-Durchgangslöchern (42) angeordnet ist.

## Revendications

1. Dispositif de transmission à réduction (1) comprenant :
un carter (10) présentant des dents intérieures (12) sur un côté de circonférence interne ;
un pignon (40) présentant des dents extérieures (41) se solidarisant avec les dents intérieures (12) ;
des vilebrequins (50) qui font osciller le pignon (40) ; et
un porteur (60) présentant une première partie de maintien (61) maintenant en rotation des parties d'une extrémité des vilebrequins (50), une deuxième partie de maintien (62) maintenant en rotation des parties de l'autre extrémité des vilebrequins (50) et au moins deux colonnes (63) couplant la première partie de maintien (61) et la deuxième partie de maintien (62) l'une avec l'autre,
**caractérisé en ce que**
les vilebrequins (50) sont disposés entre les au moins deux colonnes (63) dans une direction circonférentielle autour d'un axe central (L1) des dents intérieures (12) du carter (10), et le nombre de vilebrequins (50) est supérieur au nombre des au moins deux colonnes (63).

2. Le dispositif de transmission à réduction (1) selon la revendication 1, dans lequel des roulements à aiguilles (73, 74) sont respectivement disposés entre la première partie de maintien (61) et les parties de l'une extrémité des vilebrequins (50), et entre la deuxième partie de maintien (62) et les parties de l'autre extrémité des vilebrequins (50).

3. Le dispositif de transmission à réduction (1) selon la revendication 1 ou 2, dans lequel le pignon (40) comprend :
des trous traversants de vilebrequin (42) à travers lesquels les vilebrequins (50) sont prolongés ; et
au moins deux trous traversant de colonne (43) à travers lesquels les au moins deux colonnes (63) sont prolongées,
dans lequel les trous traversants de vilebrequin (42) sont disposés entre les au moins deux trous traversants de colonne (43) dans une direction circonférentielle du pignon (40), et le nombre de trous traversants de vilebrequin (42) set supérieur au nombre des au moins deux trous traversants de colonne (43).

4. Le dispositif de transmission à réduction (1) selon la revendication 3, dans lequel
deux trous traversants de colonne (43) sont espacés l'un de l'autre dans la direction circonférentielle du pignon (40), et
le même nombre pluriel de trous traversants de vilebrequin (42) est disposé dans chacune de deux zones entre les deux trous traversants de colonne (43) dans la direction circonférentielle du pignon (40).
